# EUROPEAN PATENT APPLICATION

(11) **EP 4 835 922 A1**
(43) Date of publication of application: **04.11.2026**
(21) Application number: 26175059.0
(22) Date of filing: 28.04.2026
(51) Int. Cl.: H01C 1/14, H01C 7/02, G01K 7/22, H01C 1/144, H01C 1/146, H01C 17/28, H01C 17/065

(54) **OVER-MOLDED PTC DEVICE WITH INTERDIGITATED STRUCTURES**

(30) Priority: 30.04.2025 US 202563797242 P
(71) Applicant: Littelfuse, Inc., Rosemont, Illinois 60018 (US)
(72) Inventor: Pineda, Martin G., Rosemont 60018 (US); Fuentes Godinez, Sergio, Rosemont 60018 (US); Hughes, Rhodri, Rosemont 60018 (US)
(74) Representative: Arnold & Siedsma

(57) **Abstract**

An over-molded PTC device can include an interdigitated lead frame that can be disposed in a single layer and sit in a center or a middle of one monolithic layer of PTC material molded on and around the interdigitated lead frame.

## Description

The present application claims priority to U.S. Provisional Application Serial No. 63/797,242, entitled "OVERMOLDED PTC DEVICE WITH INTERDIGITATED STRUCTURES" and filed April 30, 2025.

### FIELD

The present disclosure generally relates to PTC devices. More particularly, the present disclosure relates to an over-molded PTC device with interdigitated structures.

### BACKGROUND

Positive temperature coefficient (PTC) devices are known in the art. In PTC devices, a resistance of a device increases as a temperature of the device rises. Polymeric PTC (PPTC) devices are particularly suited for use as temperature sensors, over-current protection devices, and the like.

For example, a known over-current protection device includes two metal foil electrode layers and a PPTC material layer laminated therebetween. Resistance of the PPTC material layer is controlled by device thickness and conductive particles and/or conductive fillers, such as carbon black, tungsten carbide, nickel, or any other conductive metal, loaded therein. However, the multiple layers of such devices can be undesirable due to the increased size, difficulty in manufacturing, and inability to control where in the PPTC material layer (e.g., center, sides, top, bottom) the activation thereof occurs.

In view of the above, there is a continuing, ongoing need for improved PPTC devices.

### BRIEF SUMMARY

This Brief Summary is provided to introduce a selection of concepts in a simplified form that are further described below in the Detailed Description. This Brief Summary is not intended to identify key features or essential features of claimed subject matter or intended as an aid in determining scope of the claimed subject matter.

A device can include an interdigitated lead frame and a monolithic layer of PTC material molded on and around the interdigitated lead frame.

The interdigitated lead frame can sit in a center of the monolithic layer of the PTC material.

The PTC material can be a PPTC material.

The PPTC material can include one or more of the following polymers: crystalline polymers, high density polyethylene (HDPE), polyvinylidene fluoride (PVDF), low density polyethylene (LDPE), linear low density polyethylene (LLDPE), medium density polyethylene (MDPE), ultra-weight high density polyethylene, thermoplastic polyurethane (TPU), ethylene methyl acrylate (EMA), ethylene butyl acrylate (EBA), polypropylene (PP), ethylene tetrafluoroethylene (ETFE), and polyamide (nylon).

The PPTC material can include one or more of the following conductive particles: carbon black, graphene, graphite powder, carbon nanotube (CNT), metal, including nickel, silver, copper, aluminum, and/or silver plated metal, and/or ceramic type conductive fillers, including tungsten carbide, titanium carbide, titanium diboride, zirconium diboride, titanium nitride, and/or zirconium nitride.

The interdigitated lead frame can be disposed in a single layer.

The device can include multiple paths of parallel circuits formed by alternating fingers of the interdigitated lead frame that can interlock with one another and the PTC material, wherein the interdigitated lead frame can be an open circuit without the monolithic layer of the PTC material molded on and around the interdigitated lead frame.

The interdigitated lead frame can be copper or copper alloy.

The device can include one or more nodules on opposing sides of alternating fingers of the interdigitated lead frame.

The one or more nodules can be nickel.

A method can include providing an interdigitated lead frame and molding a monolithic layer of PTC material on and around the interdigitated lead frame.

The method can include originating activation of the PTC material from the interdigitated lead frame at a center of the monolithic layer of the PTC material.

The PTC material can be a PPTC material.

The PPTC material can include one or more of the following polymers: crystalline polymers, high density polyethylene (HDPE), polyvinylidene fluoride (PVDF), low density polyethylene (LDPE), linear low density polyethylene (LLDPE), medium density polyethylene (MDPE), ultra-weight high density polyethylene, thermoplastic polyurethane (TPU), ethylene methyl acrylate (EMA), ethylene butyl acrylate (EBA), polypropylene (PP), ethylene tetrafluoroethylene (ETFE), and polyamide (nylon).

The PPTC material can include one or more of the following conductive particles: carbon black, graphene, graphite powder, carbon nanotube (CNT), metal, including nickel, silver, copper, aluminum, and/or silver plated metal, and/or ceramic type conductive fillers, including tungsten carbide, titanium carbide, titanium diboride, zirconium diboride, titanium nitride, and/or zirconium nitride.

The method can include disposing the interdigitated lead frame in a single layer.

The method can include forming multiple paths of parallel circuits by alternating fingers of the interdigitated lead frame that can interlock with one another and the PTC material, wherein the interdigitated lead frame can be an open circuit without the monolithic layer of the PTC material molded on and around the interdigitated lead frame.

The interdigitated lead frame can be copper or copper alloy.

The method can include providing one or more nodules on opposing sides of alternating fingers of the interdigitated lead frame.

The one or more nodules can be nickel.

Other technical features may be readily apparent to one skilled in the art from the following figures, descriptions, and claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1A is a schematic diagram illustrating an interdigitated lead frame in accordance with the disclosure.
FIG. 1B is a top view illustrating an interdigitated lead frame in accordance with the disclosure.
FIG. 2 is a microscopic view illustrating nodules of an interdigitated lead frame in accordance with the disclosure.
FIG. 3A is a perspective view illustrating an over-molded PTC device in accordance with the disclosure.
FIG. 3B is a perspective view illustrating an over-molded PTC device in accordance with the disclosure.
FIG. 4 is a flow chart illustrating a method in accordance with the disclosure.

### DETAILED DESCRIPTION

An over-molded PTC device in accordance with the present disclosure will now be described more fully hereinafter with reference made to the accompanying drawings. The over-molded PTC device may, however, be embodied in many different forms and should not be construed as being limited to the examples set forth herein. Rather, these are provided so that this disclosure will convey certain exemplary aspects of the over-molded PTC device to those skilled in the art.

In accordance with the disclosure, an over-molded PTC device can include an interdigitated lead frame structure that can sit in a center or a middle of one monolithic layer of a conductive PTC compound that can be deposited onto the interdigitated lead frame structure, for example, by injection molding, transfer molding, or the like. Importantly, the interdigitated lead frame structure can be disposed in a single layer, thereby eliminating the multiple layers of foil and electrodes as in known devices. Nevertheless, the interdigitated lead frame structure can include a single lead frame or multiple lead frames, all disposed in the single layer.

Advantageously, the interdigitated lead frame structure as disclosed herein can control a resistance of the over-molded PTC device by creating multiple paths of parallel circuits formed by alternating fingers of the interdigitated lead frame structure that interlock with one another and the PTC compound. In particular, the interdigitated lead frame structure can be designed and configured with more or fewer paths of the parallel circuits to provide more or fewer paths for current traveling through the interdigitated lead frame structure, thereby decreasing or increasing the resistance as needed for a particular application.

As another advantage, the interdigitated lead frame structure as disclosed herein can also create a hotline in the center or the middle of the PTC compound. In particular, the interdigitated lead frame structure sitting in the center or the middle of the one monolithic layer of the PTC compound can ensure that any activation of the PTC compound, including increases in temperature and resistance, originates in the center or the middle of the one monolithic layer of the PTC compound.

As a still further advantage, the over-molded PTC device as disclosed herein can have a small form factor, be highly integrated, and enable efficient ion transport.

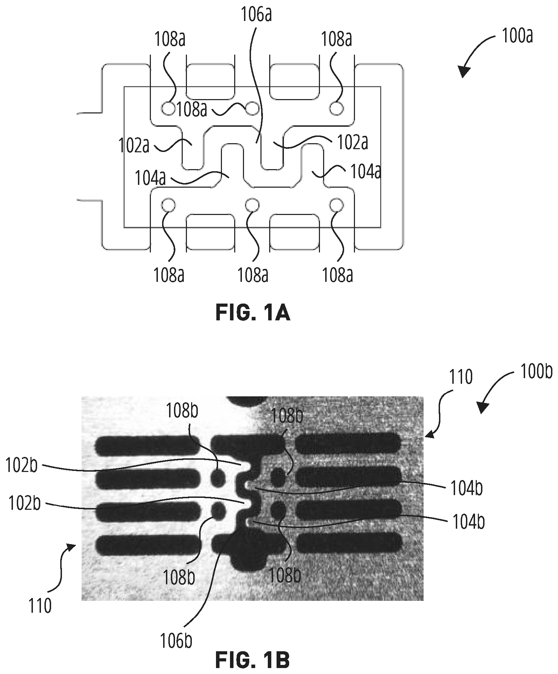

FIG. 1A is a schematic diagram illustrating an interdigitated lead frame 100a in accordance with the disclosure. As seen, the interdigitated lead frame 100a can include a first set of alternating fingers 102a that face and interlock with a second set of interlocking alternating fingers 104a with an open space or a gap 106a therebetween. The interdigitated lead frame 100a can be disposed in a single layer, and the interdigitated lead frame 100a can be copper or copper alloy.

Similar to FIG. 1A, FIG. 1B is a top view illustrating an interdigitated lead frame 100b in accordance with the disclosure. As seen, the interdigitated lead frame 100b can include a first set of alternating fingers alternating finger 102b that face and interlock with a second set of interlocking alternating fingers alternating finger 104b with an open space or a gap 106b therebetween. The interdigitated lead frame 100b can be disposed in a single layer, and, the interdigitated lead frame 100b can be copper or copper alloy.

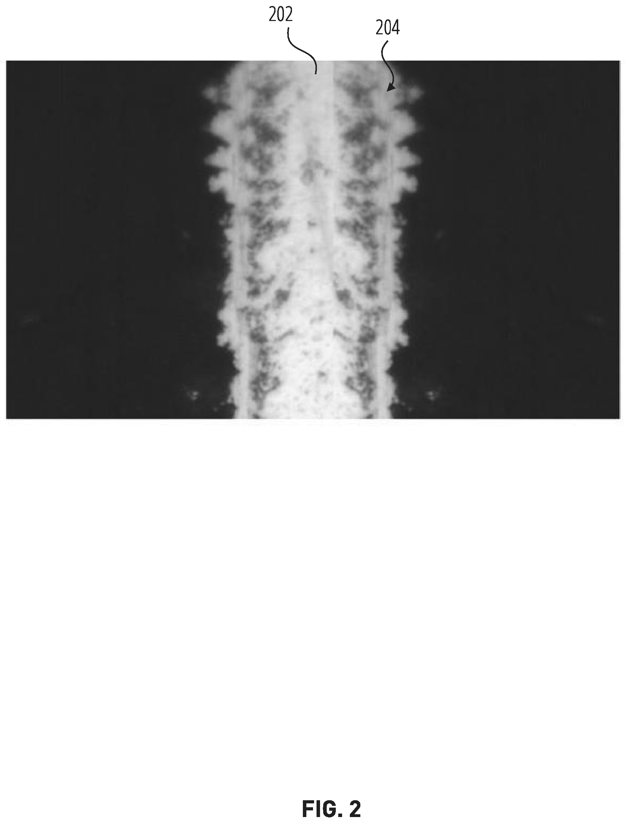

One or more nodules 204 can be disposed on opposing sides of each of the alternating fingers 102a, 104a of the interdigitated lead frame 100a and/or on opposing side of each of the alternating fingers 102b, 104b of the interdigitated lead frame 100b. For example, the nodules 204 can be disposed on one or more sides of each of the alternating fingers 102a, 104a and/or each of the alternating fingers 102b, 104b and provide protection to the interdigitated lead frame 100a and/or the interdigitated lead frame 100b, respectively, for example, by minimizing and/or preventing oxidation thereof. FIG. 2 is a microscopic view illustrating such nodules 204 disposed on an alternating finger 202 in accordance with the disclosure, and it is to be understood that the alternating finger 202 can be the same as or similar to any of the alternating fingers 102a, 104a, 102b, 104b. When the interdigitated lead frame 100a, 100b is copper or copper alloy, the nodules 204 can be nickel.

On its own, the interdigitated lead frame 100a, 100b is an open circuit. However, when molded with a PTC material 302a, 302b as disclosed herein, multiple paths of parallel circuits can be formed by the alternating fingers 102a, 104a of the interdigitated lead frame 100a and/or the alternating fingers 102b, 104b of the interdigitated lead frame 100b that interlock with one another and the PTC material 302a, 302b.

The PTC material 302a, 302b can be a PPTC material. For example, The PPTC material can include one or more PPTC polymers and/or one or more conductive particles or conductive fillers. In particular, these polymers can include any of the following in various combinations: crystalline polymers, high density polyethylene (HDPE), polyvinylidene fluoride (PVDF), low density polyethylene (LDPE), linear low density polyethylene (LLDPE), medium density polyethylene (MDPE), ultra-weight high density polyethylene, thermoplastic polyurethane (TPU), ethylene methyl acrylate (EMA), ethylene butyl acrylate (EBA), polypropylene (PP), ethylene tetrafluoroethylene (ETFE), and/or polyamide (nylon). Furthermore, these conductive particles or conductive fillers can include any of the following in various combinations: carbon black, graphene, graphite powder, carbon nanotube (CNT), metal, including nickel, silver, copper, aluminum, and/or silver plated metal, and/or ceramic type conductive fillers, including tungsten carbide, titanium carbide, titanium diboride, zirconium diboride, titanium nitride, and/or zirconium nitride.

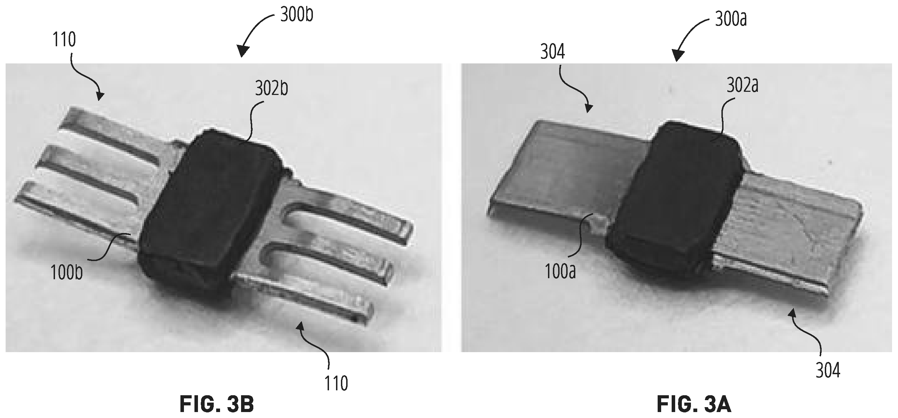

FIG. 3A is a perspective view illustrating an over-molded PTC device 300a with a first end termination design in accordance with the disclosure, and FIG. 3B is a perspective view illustrating an over-molded PTC device 300b with a second end termination design in accordance with the disclosure. In particular, the over-molded PTC device 300a can include the interdigitated lead frame 100a and a monolithic layer of the PTC material 302a molded on and around the interdigitated lead frame 100a. Similarly, the over-molded PTC device 300b can include the interdigitated lead frame 100b and a monolithic layer of the PTC material 302b molded on and around the interdigitated lead frame 100b. The interdigitated lead frame 100a can sit in a center of the monolithic layer of the PTC material 302a, and activation of the PTC material 302a can originate at the center of the monolithic layer of the PTC material 302a. Similarly, the interdigitated lead frame 100b can sit in a center of the monolithic layer of the PTC material 302b, and activation of the PTC material 302b can originate at the center of the monolithic layer of the PTC material 302b.

As explained above, the PTC material 302a can be molded onto and/or around the interdigitated lead frame 100a, and the PTC material 302b can be molded onto and/or around the interdigitated lead frame 100b. The interdigitated lead frame 100a, 100b can be placed in a suitable mold and securely locked therein, for example, with locking apertures 108a, 108b (e.g. circular holes) as illustrated in FIG. 1A and FIG. 1B, to ensure proper placement of the interdigitated lead frame 100a, 100b within the PTC material 302a, 302b, respectively.

As also explained above, the over-molded PTC device 300a, 300b can be designed and configured for use in different applications. In this regard, the over-molded PTC device 300a, 300b, including those portions of the interdigitated lead frame 100a, 100b extending outside of the PTC material 302a, 302b, can have different form factors suitable for different applications. For example, the over-molded PTC device 300a illustrated in FIG. 3A, the interdigitated lead frame 100a of which is illustrated in FIG. 1A, can include solid connection mechanisms 304 on opposing sides of the PTC material 302a. In particular, the interdigitated lead frame 100a extending on each side of the PTC material 302a can include a singular terminal for connection thereto. Conversely, the over-molded PTC device 300b illustrated in FIG. 3B, the interdigitated lead frame 100b of which is illustrated in FIG. 1B, can include forked or slotted connection mechanisms 110 on opposing sides of the PTC material 302a. In particular, each of the connection mechanisms 110 can include part of the interdigitated lead frame 100b extending outside of a respective side of the PTC material 302a and can include a fork with a plurality of terminal branches for connection thereto separated by a plurality of open slots. The over-molded PTC device 300a and/or the over-molded PTC device 300b can be used in connection with surface mount applications.

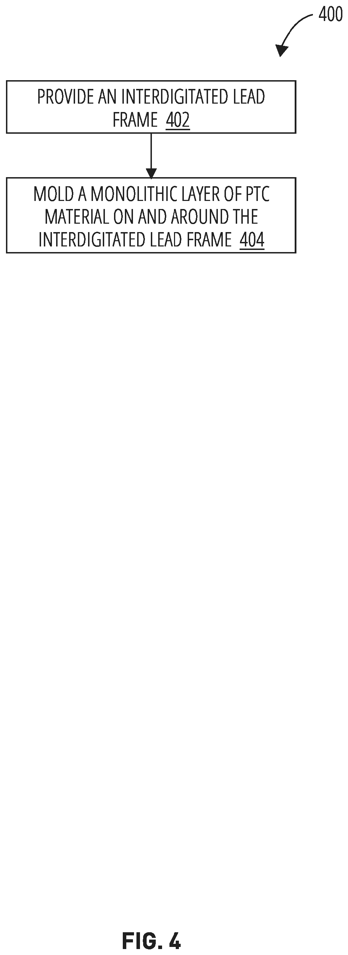

FIG. 4 is a flow chart illustrating a method 400 in accordance with the disclosure. As seen in FIG. 4, the method 400 can include providing an interdigitated lead frame as in 402. For example, the interdigitated lead frame can be disposed in a single layer and, on its own, be an open circuit. The method 400 can also include providing one or more nodules on one or more sides of the interdigitated lead frame to protect the interdigitated lead frame. Additionally or alternatively, the method 400 can also include over-molding a dielectric layer on the interdigitated lead frame.

After providing the interdigitated lead frame as in 402, the method 400 can include molding a monolithic layer of PTC material on and around the interdigitated lead frame as in 404. A combination of the interdigitated lead frame and the PTC material can form a closed circuit. In particular, alternating fingers of the interdigitated lead frame can interlock with one another and the PTC material to form multiple paths of parallel circuits.

The monolithic layer of the PTC material can be molded so that the interdigitated lead frame can sit in a center of the monolithic layer of the PTC material. Any activation of the PTC material while in use can originate from the interdigitated lead frame at the center of the monolithic layer of the PTC material.

As used herein, an element or a step recited in the singular and proceeded with the word "a" or "an" should be understood as not excluding plural elements or steps, unless such exclusion is explicitly recited.

While the present disclosure makes reference to certain examples, numerous modifications, alterations, and changes to the described are possible without departing from the scope of the present disclosure, as defined in the appended claims. Accordingly, it is intended that the present disclosure not be limited to the described, but that it has the full scope defined by the language of the following claims and equivalents thereof.

## Claims

1. A device comprising:
an interdigitated lead frame;
a monolithic layer of PTC material molded on and around the interdigitated lead frame.

2. The device of claim 1 wherein the interdigitated lead frame sits in a center of the monolithic layer of the PTC material.

3. The device of claim 1 or 2, wherein the PTC material is a PPTC material.

4. The device of claim 3, wherein the PPTC material includes one or more of the following polymers: crystalline polymers, high density polyethylene (HDPE), polyvinylidene fluoride (PVDF), low density polyethylene (LDPE), linear low density polyethylene (LLDPE), medium density polyethylene (MDPE), ultra-weight high density polyethylene, thermoplastic polyurethane (TPU), ethylene methyl acrylate (EMA), ethylene butyl acrylate (EBA), polypropylene (PP), ethylene tetrafluoroethylene (ETFE), and polyamide (nylon).

5. The device of claim 3 or 4, wherein the PPTC material includes one or more of the following conductive particles: carbon black, graphene, graphite powder, carbon nanotube (CNT), metal, including nickel, silver, copper, aluminum, and/or silver plated metal, and/or ceramic type conductive fillers, including tungsten carbide, titanium carbide, titanium diboride, zirconium diboride, titanium nitride, and/or zirconium nitride.

6. The device of any of the preceding claims, wherein the interdigitated lead frame is disposed in a single layer.

7. The device of any of the preceding claims, further comprising:
multiple paths of parallel circuits formed by alternating fingers of the interdigitated lead frame that interlock with one another and the PTC material,
wherein the interdigitated lead frame is an open circuit without the monolithic layer of the PTC material molded on and around the interdigitated lead frame.

8. The device of any of the preceding claims, wherein the interdigitated lead frame is copper or copper alloy.

9. The device of any of the preceding claims, further comprising:
one or more nodules on opposing sides of alternating fingers of the interdigitated lead frame, preferably wherein the one or more nodules are nickel.

10. A method comprising:
providing an interdigitated lead frame;
molding a monolithic layer of PTC material on and around the interdigitated lead frame.

11. The method of claim 10, further comprising:
originating activation of the PTC material from the interdigitated lead frame at a center of the monolithic layer of the PTC material, preferably wherein the PTC material is a PPTC material.

12. The method of claim 11, wherein the PPTC material includes one or more of the following polymers: crystalline polymers, high density polyethylene (HDPE), polyvinylidene fluoride (PVDF), low density polyethylene (LDPE), linear low density polyethylene (LLDPE), medium density polyethylene (MDPE), ultra-weight high density polyethylene, thermoplastic polyurethane (TPU), ethylene methyl acrylate (EMA), ethylene butyl acrylate (EBA), polypropylene (PP), ethylene tetrafluoroethylene (ETFE), and polyamide (nylon),
and/or
wherein the PPTC material includes one or more of the following conductive particles: carbon black, graphene, graphite powder, carbon nanotube (CNT), metal, including nickel, silver, copper, aluminum, and/or silver plated metal, and/or ceramic type conductive fillers, including tungsten carbide, titanium carbide, titanium diboride, zirconium diboride, titanium nitride, and/or zirconium nitride.

13. The method of any of the claims, further comprising:
disposing the interdigitated lead frame in a single layer.

14. The method of any of the claims 10-13, further comprising:
forming multiple paths of parallel circuits by alternating fingers of the interdigitated lead frame that interlock with one another and the PTC material,
wherein the interdigitated lead frame is an open circuit without the monolithic layer of the PTC material molded on and around the interdigitated lead frame.

15. The method of any of the claims 10-14, wherein the interdigitated lead frame is copper or copper alloy, and/or providing one or more nodules on opposing sides of alternating fingers of the interdigitated lead frame, preferably wherein the one or more nodules are nickel.
